# FASCICULE DE BREVET EUROPEEN

(11) **EP 2 307 609 B1**
(45) Date de publication et mention de la délivrance du brevet: **25.07.2012**
(21) Numéro de dépôt: 09737063.9
(22) Date de dépôt: 16.07.2009
(51) Int. Cl.: D06N 3/14, C08G 18/36

(54) **UTILISATION DE POLYOLS ISSUS DE SOURCE VEGETALE RENOUVELABLE POUR LA FABRICATION DE REVETEMENTS DE SOLS**
VERWENDUNG VON POLYOLEN AUS EINEM NACHWACHSENDEN ROHSTOFF ZUR HERSTELLUNG VON BODENBELEGEN
USE OF POLYOLS DERIVED FROM A RENEWABLE PLANT SOURCE FOR THE MANUFACTURE OF FLOOR COVERINGS

(30) Priorité: 18.07.2008 FR 0854911
(43) Date de publication de la demande: 13.04.2011
(73) Titulaire: GERFLOR, 69100 Villeurbanne (FR)
(72) Inventeur: CHARLES, Gwénaëlle, F-69170 Saint Marcel L'Eclairé (FR); HINAULT, Robert, F-69380 Marcilly d'Azergue (FR)
(74) Mandataire: Dupuis, François
(86) Numéro de dépôt international: PCT/FR2009/051409
(87) Numéro de publication internationale: WO 2010/007319

(56) Documents cités:
- WO-A-03/078493
- WO-A-2005/123798
- WO-A-2008/045342
- WO-A-2008/073808
- GB-A- 875 920
- US-A- 5 140 088
- DATABASE WPI Week 198543 Thomson Scientific, London, GB; AN 1985-265808 XP002563142 & JP 60 177013 A (ITO SEIYU KK) 11 septembre 1985 (1985-09-11)

## Description

### DOMAINE TECHNIQUE

La présente invention concerne un nouveau revêtement de sols ne contenant ni PVC, ni plastifiant organique connu. Au contraire, celui-ci est réalisé à l'aide d'un ou plusieurs produits naturels constituant une ressource renouvelable, en particulier l'huile de ricin et le glycérol.

Plus précisément, le revêtement de sols selon l'invention est obtenu par réticulation, après enduction, entre un polyol naturel tel que l'acide ricinoléique contenu dans l'huile de ricin ou le glycérol et un isocyanate. Le produit obtenu présente toutes les performances requises selon les normes NF EN 651 et 649.

### ETAT DE LA TECHNIQUE ANTERIEURE

Le PVC plastifié ou polychlorure de vinyle plastifié est utilisé depuis longtemps dans la fabrication de revêtements de sols. Cependant l'utilisation de ce produit pose trois problèmes majeurs :
- Il est issu en grande partie du pétrole, énergie fossile non renouvelable ;
- Il contient du chlore ;
- Il contient des phthalates qui sont de plus en plus décriés pour leur incidence sur la santé.

D'autres revêtements de sols sont synthétisés à partir de caoutchoucs ou de polyoléfines.

En raison des inconvénients majeurs liés à ces produits, des solutions alternatives ont été développées pour obtenir des revêtements de sols présentant notamment les qualités suivantes :
- Ils sont fabriqués à partir de matière première renouvelable, de préférence une huile végétale.
- Ils ne contiennent pas de plastifiant.

De plus, de tels produits doivent posséder les propriétés nécessaires à leur utilisation dans le domaine des revêtements de sols, à savoir : souplesse, résistance à l'encrassement, facilité d'entretien (résistances aux tâches), résistance à l'abrasion, résistance à la lumière.

Les huiles végétales, sous forme époxyde, sont déjà utilisées dans la synthèse de revêtements de sols, notamment en tant que plastifiants dans la formulation du PVC.

Le revêtement de sols, issu de matières premières renouvelables, qui est le plus répandu est le linoléum. Cependant, sa synthèse pose un problème industriel, à cause du temps de maturation très long qui est de l'ordre de quelques semaines.

Par ailleurs, le procédé de synthèse du linoléum a très peu évolué au cours du temps. Il consiste à faire chauffer de l'huile de lin (ou de colza, de soja, de poisson ou de bois), en présence d'air et d'agents siccatifs (par exemple des composés de cobalt, de manganèse, de plomb ou de zinc). Un tel mélange est porté à haute température (entre 100 et 200°C) pendant 10 heures ou plus. L'huile ainsi oxydée est ensuite mélangée avec des résines de type colophane, et des charges organiques telles que la poudre de liège ou la farine de bois. Ce mélange est alors chauffé pendant plusieurs heures à température élevée afin de compléter l'oxydation. Le produit ainsi obtenu est doublé avec un tissu de jute puis subit un processus d'oxydation de longue durée dans des chambres d'étuvage, dans lesquelles le matériau est porté à une température de 70 à 80°C pendant environ 28 jours.

Ce matériau possède des propriétés mécaniques (élasticité, résistance au frottement, allongement à la rupture) très inférieures à celles du PVC. En outre, la diversité de motifs est réduite car ceux-ci sont réalisés en pressant plusieurs couches de produits de couleur différente.

D'autres voies de synthèse de revêtements de sols à partir d'huile végétale ont également été proposées :
Une première option consiste en un mélange de 20 à 40 % massique d'une ou plusieurs huiles (huile de lin, de bois, de soja ou autre), de 50 à 75 % de charges (poudre de liège, farine de bois, fibre de coco ou de coton, amidon, ...) et d'un peroxyde. Ce mélange est chauffé à 200-280°C afin de le polymériser et de le réticuler partiellement pour obtenir un produit intermédiaire qui peut ensuite être transformé par ajout de liants ou d'autres adjuvants. Ce produit intermédiaire peut ensuite être doublé sur une toile de jute, le matériau ainsi obtenu possède une fragilité semblable au linoléum mais ne contient pas de métaux lourds. A cet intermédiaire, peuvent ensuite être ajoutés une matière élastomère (naturelle ou synthétique), d'autres charges et un agent de vulcanisation (peroxyde). Ce second mélange est ensuite porté à température élevée pour terminer la polymérisation. Le produit peut alors être traité par enduction ou par calandrage.

La société DLW a également développé un revêtement de sols à partir d'acide carboxylique ajouté à un produit d'époxydation, qui doit contenir plus d'un groupement époxyde par molécule (huiles de lin, ou de soja, ou de ricin époxydées) et un composé contenant de l'étain. Ce matériau est complété par l'ajout de charges, de pigments, d'agents gonflants et autres. Le temps d'incubation est alors réduit à moins de 10 minutes. L'étape de réticulation peut être réalisée thermiquement (70°C) et/ou par radiation UV et/ou par radiation IR.

La société Boheme Chem. Fab a également mis au point un revêtement de sols composé d'esters d'acides gras époxydés (huile de lin ou huile de soja époxydée), d'un ester d'acide à plusieurs groupements carboxyliques comprenant au moins une double liaison, de polyols et de charges. Ce mélange est chauffé à 160°C pendant 5 minutes, sous un flux d'air dans un four. Plus précisément, le matériau est déposé sur un papier et constitué d'une couche de 5 mm de « produit A » déposé sur une couche de « produit B » déposé sur une toile de fibre de verre, le tout porté à 180°C pendant 3 minutes. Après refroidissement, le matériau est séparé du papier et fait l'objet d'un processus de maturation afin de lui conférer des propriétés élastiques et d'obtenir une cohésion plus élevée entre les deux couches.

Des solutions plus élaborées ont également été proposées : un matériau contenant des produits de polyréaction comprenant un acide (ou un polyacide ou un mélange d'acides carboxyliques) avec au moins une double liaison, des produits d'époxydation d'esters d'acide carboxylique et un agent liant (30 à 98%). Les produits d'époxydation proposés sont : l'huile de lin, de soja, de ricin ou de colza époxydée. Les charges (2 à 70 %) utilisées sont la farine de bois, la craie ou le liège. Le mélange peut également contenir des agents gonflants ou des pigments.

Une autre grande voie est la polymérisation des huiles végétales :
Les anciens procédés de polymérisation sont tous réalisés en présence d'une argile (bentonite, montmorillonite, hectorite etc...), activée ou non par un élément acide ou échangée par un élément basique. La polymérisation est réalisée en deux étapes. Tout d'abord, le mélange d'acides gras insaturés est mis en présence avec une argile minérale modifiée jusqu'à 40-60% de polymérisation, puis les acides non polymérisés sont séparés et polymérisés de la même manière. Cette polymérisation est effectuée à chaud (180-270°C) et sous pression.

Il a également été décrit un matériau issu de la polymérisation d'huile végétale et utilisé comme revêtement de sols dont la synthèse est la suivante : 42,9% massique d'huile de soja (avec un pourcentage d'acide gras libres de 6,5 % massique) sont mis en présence de 21,5% massique d'huile fortement oléique hydroxylée. Sont ensuite additionnés 34,3% massique d'acide norbornene dicarboxylique (NORCOOH) et 1% d'une solution d'acide adipique (COOH(CH₂)₄COOH). Le mélange est homogénéisé puis réticulé à 140°C pendant 15 minutes. Le produit obtenu est transparent, possède des propriétés plastiques, est déformable et peut être utilisé comme revêtement de sols.

Les documents WO2005/123798, WO2008/073808, WO2008/045342 et WO2003/078493 décrivent des revêtemenst de sol textiles (tapis, moquettes...) dont l'envers, qui sert à l'accroche des fibres textiles, peut être constitué de polyuréthane éventuellement en partie d'origine naturelle.

Par ailleurs, le document GB 875 920 décrit un revêtement de sols monocouche homogène, obtenu à l'aide d'un procédé complexe, associant un liant et des charges. Le liant résulte du mélange d'un polyol et d'un isocyanate.

Il existe toutefois un besoin évident de développer de nouveaux revêtements de sols, issus de produits naturels renouvelables, utilisables en tant que tels et dont la fabrication est facilitée.

### EXPOSE DE L'INVENTION

Dans le cadre de l'invention, le Demandeur a montré que le produit résultant de la réaction entre l'acide ricinoléique présent en grande quantité dans l'huile de ricin et/ou le glycérol et un isocyanate, montrait toutes les dispositions pour constituer un revêtement de sols.

Dans le cadre de la présente invention, les revêtements de sols visés sont ceux dont la couche supérieure en contact avec l'utilisateur, également appelée couche d'usure ou couche d'utilisation, est réalisée à base de polyuréthane comme défini ci-après. Une telle couche présente typiquement une épaisseur comprise entre 0,1 et 2 mm, avantageusement de l'ordre de 0,3 à 1 mm.

Par définition il s'agit donc d'un revêtement non textile, appartenant à la même catégorie que le PVC ou le linoléum.

Plus précisément et selon un premier aspect, la présente invention concerne un revêtement de sols comprenant un polyuréthane obtenu par réaction entre au moins un un polyol issu de l'huile de ricin et/ou du glycérol et au moins un isocyanate.

Il s'agit avantageusement d'une structure multicouche dont la couche supérieure comprend ledit polyuréthane.

Le fait qu'il s'agisse de la couche supérieure n'exclut pas la possibilité que des motifs de décoration (granulés, impression, ...) soient réalisés à sa surface.

On entend par « multicouche » le fait que la structure possède au moins deux couches, en plus du support d'enduction qui peut persister ou non dans le revêtement final. Avantageusement, un multicouche comprend de 2 à 4 couches d'épaisseur désirée.

La présente invention définit en termes précis la composition de la couche supérieure mais cela n'exclut pas la possibilité que des couches inférieures, voire la totalité des couches, soient également réalisées à base de polyuréthane, avantageusement obtenu par réaction entre au moins un alcool, avantageusement un polyol, issu d'une source végétale renouvelable et au moins un isocyanate.

De manière connue, la formation du polyuréthane résulte de la réaction entre une fonction alcool (OH) et une fonction isocyanate (N=C=O) apportée par le second composé essentiel.

Dans le cadre de l'invention, il a été mis en évidence qu'un polyol, possédant au moins deux fonctions libres par molécule susceptible de réagir avec la fonction isocyanate, était privilégié pour obtenir une réticulation suffisante, adaptée à l'application revêtement de sols.

De manière privilégiée, le polyol mis en jeu est issu d'une source végétale renouvelable.

Il s'avère que les huiles végétales constituent des réservoirs de polyols privilégiés susceptibles d'être mis en oeuvre dans le cadre de la présente invention.Une première source de polyols très intéressante est l'huile de ricin. En effet, celle-ci est très riche (environ 90% des acides gras) en acide ricinoléique ou acide oléique hydoxylé, de formule :

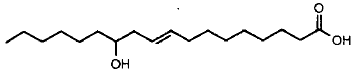

Il s'agit d'un acide gras à 18 carbones comprenant une fonction alcool (-OH) susceptible de réagir avec l'isocyanate et possédant une double liaison sur sa chaîne.

En pratique, dans l'huile de ricin, l'acide ricinoléique est greffé sur des molécules de glycérol, qui correspond de fait à un polyol.

Plus précisément, l'huile de ricin est généralement composée de 70% de tricinoléate de glycérol et de 30% de diricinoléate monoacyl non hydroxylé de glycérol, c'est à dire un triglycéride formé de 2 molécules d'acide ricinoléique et d'une molécule d'un autre acide gras ne contenant pas de groupements OH, ici et à titre d'illustration l'acide oléique ou linoléique :

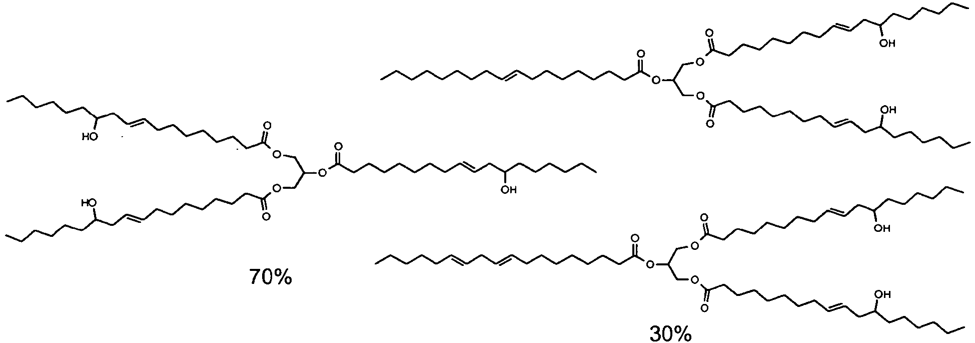

Selon l'invention, l'acide ricinoléique est donc avantageusement fournie sous forme de diricinoléate monoacyl non hydroxylé de glycérol et/ou de tricinoléate de glycérol.

Dans le cadre de l'invention, l'huile de ricin peut être utilisée en tant que telle. Alternativement, les dérivés du glycérol, substitués à l'aide de deux ou trois molécules d'acide ricinoléique, peuvent être purifiés et utilisés seuls ou en combinaison.

En outre et de manière avantageuse pour mieux se distinguer de l'art antérieur, l'acide ricinoléique, ou plus généralement l'huile de ricin, est sous forme non époxydée.Un second polyol privilégié est le glycérol. Comme déjà dit, toutes les huiles végétales sans exception contiennent du glycérol dont au moins une des trois fonctions OH, voire les trois, ont réagi avec des acides gras. Or, notamment dans la transformation des huiles végétales en biocarburants (notamment biodiesel), une réaction d'estérification libère le glycérol comme sous-produit. La présente invention propose donc une nouvelle application pour ce « déchet » naturel qu'il est important de valoriser en vue des quantités importantes qui vont bientôt être disponible avec l'essor des biocarburants.

Ainsi, dans le cadre de l'invention, le glycérol issu des huiles végétales par estérification, et avantageusement purifié, peut être mis en oeuvre.

Il est à noter que le glycérol en tant que tel est privilégié. Toutefois, le glycérol porteur d'un acide gras, et possédant donc deux fonctions alcool libres et réactives, constitue également un polyol susceptible d'être mis en oeuvre dans le cadre de la présente invention.

Selon l'invention, plusieurs sources de polyols issus de sources végétales renouvelables peuvent être combinées. Notamment, de l'huile de ricin et du glycérol peuvent être mélangés à l'isocyanate.

Le second composant essentiel mis en jeu selon l'invention est donc un isocyanate.

La source d'isocyanate est certes, quand à elle, d'origine pétrolière. Il peut s'agir d'un isocyanate aromatique et/ou aliphatique, voire d'un mélange.

Avantageusement, il s'agit d'un diisocyanate avantageusement aromatique, et encore plus avantageusement du MDI (4,4'-diisocyanate de diphényle méthane), de l'IPDI (isocyanate de 3-isocyanatométhyl-3,5,5-triméthylcyclohexyle) ou du TDI (Diisocyanate de 2-méthyl-m-phénylène).

Les matériaux synthétisés à partir de l'isocyanate aromatique présentent des propriétés physiques et mécaniques intéressantes. Toutefois, un point faible réside dans leur tenue aux UV. Les doubles liaisons étant à l'origine de la coloration jaune sous irradiation UV, il peut être préféré ou combiné des diisocyanates aliphatiques ou cycloaliphatiques, et notamment le HDI (hexaméthylène diisocyanate) ou le H₁₂MDI (dicyclohexyleméthanediisocyanate).

Un tel revêtement de sols peut en outre comprendre les éléments suivants, utiles soit pour la réaction soit pour les qualités du revêtement de sols en tant que tel :
- un catalyseur de la fabrication des polyuréthanes, avantageusement sans étain, par exemple un sel de zirconium, de bismuth, d'aluminium, de calcium, ou de magnésium ;
- une charge, notamment du carbonate de calcium, du talc, du kaolin, de la farine de bois, de la farine de liège ou de la silice ;
- un mélange de pigments ;
- un additif, par exemple un ignifugeant, un stabilisant UV, un agent dessicant ou un stabilisant thermique.

De manière privilégiée, la couche supérieure du revêtement selon l'invention est dépourvue de charges. Elle peut toutefois contenir un ou plusieurs des autres éléments mentionnés ci-dessus. Dans un mode de réalisation particulier, ladite couche supérieure du revêtement selon l'invention est constituée exclusivement de polyuréthane.

Par ailleurs, dans le cas où certaines ou toutes les couches inférieures de la structure multicouche sont réalisées à base de polyuréthane, celles-ci contiennent avantageusement des charges.

A la connaissance du Demandeur, l'invention rapporte pour la première fois l'utilisation d'un polyuréthane tel que défini précédemment, en particulier synthétisé à partir d'huile de ricin et/ou de glycérol, pour la fabrication d'un revêtement de sols non textile, en particulier pour la fabrication de sa couche d'usure ou d'utilisation. Or, les propriétés remarquables d'un tel revêtement, avantageusement multicouche, sont illustrées dans le cadre de la présente demande.

Selon un autre aspect, l'invention concerne un procédé de fabrication d'un revêtement de sols selon l'invention.

Pour l'essentiel, ce procédé comprend les étapes suivantes :
- préparation du mélange destiné à la synthèse du polyuréthane ;
- enduction du mélange sur un support ;
- éventuellement saupoudrage de granulés ;
- réaction de réticulation.

Avantageusement, le polyol et l'isocyanate, destinés à la synthèse du polyuréthane, sont mélangés de manière à obtenir un rapport massique NCO/OH compris entre 1 et 1,5, ce facteur influant sur la souplesse du produit final. En effet, plus le produit est réticulé (NCO/OH élevé), plus il est rigide et inversement.

Un mélange privilégié selon l'invention comprend en masse :
- de l'huile de ricin à hauteur de 0 à 80% ;
- du glycérol à hauteur de 0 à 20%
- un isocyanate à hauteur de 10 à 30% ;
- un catalyseur à hauteur de 0 à 1% ;
- des charges à hauteur de 0 à 75%, avantageusement 0% pour la couche supérieure ;
- des pigments à hauteur de 0 à 10% ;
- des additifs à hauteur de 0 à 75%.

Les charges, notamment le carbonate de calcium, le talc, le kaolin, la farine de bois, la farine de liège ou la silice, les pigments et les additifs, par exemple un ignifugeant, un stabilisant UV, un agent dessicant ou un stabilisant thermique, ont pour but d'améliorer les qualités du revêtement final.

Le catalyseur, quant à lui, a pour fonction de favoriser la réaction entre les groupes isocyanate et hydroxyle.

Le catalyseur le plus utilisé dans la fabrication des polyuréthanes est le dilaurate de dibutylétain (DBTL). Cependant, les composés organostanniques sont concernés par des législations environnementales.

Dans le cadre de l'invention, le catalyseur est avantageusement sans étain, par exemple un sel de zirconium, de bismuth, d'aluminium, de calcium, ou de magnésium.

Avantageusement le milieu réactionnel ne comprend pas les composés suivants : huile sous forme époxydée, DBTL, peroxyde, polyols d'origine pétrolière.

En pratique, tous les ingrédients à l'exception de l'isocyanate sont mélangés à température ambiante ou à une température plus élevée mais contrôlée. Un dégazage peut être réalisé avant l'ajout de l'isocyanate.

L'étape suivante est l'enduction du mélange qui doit avoir lieu relativement rapidement (quelques minutes) après le mélange des réactifs.

L'enduction a pour but de déposer un film présentant avantageusement une épaisseur comprise entre 0,1 et 2 mm.

Le dépôt peut être réalisé sur un support de nature très variable, poreuse ou fermée. Il peut s'agir de papier transfert, de support non tissé, de toile de jute, de toile de coton, de voile de verre, ou de tout autre support à base de fibre naturelle.

Une succession de dépôt, de nature différente, est réalisée de manière à former un revêtement multicouche. Par ailleurs et à cette étape, des granulés peuvent être saupoudrés en surface, notamment à la surface de la couche supérieure, de manière à créer des motifs.

Les couches ainsi réalisées peuvent également être imprimées.

La dernière étape est la réaction de réticulation à proprement parler, qui s'apparente à une gélification du matériau.

Celle-ci est avantageusement réalisée à haute température (comprise entre 80 et 220°C, avantageusement 150°C), et sur une durée courte (de 1 à 10 minutes).

Il s'agit donc d'un procédé relativement court et facile à mettre en oeuvre, qui s'apparente à celui du PVC et qui aboutit à des revêtements de sols de très bonnes qualités.

### EXEMPLES DE REALISATION

L'invention et les avantages qui en découlent ressortiront mieux des exemples de réalisation qui suivent, à l'appui des figures annexées. Ces exemples ne sont cependant en aucun cas limitatifs.
La figure 1 schématise les différentes étapes d'un procédé de fabrication en ligne d'un revêtement de sols tricouche selon l'invention.
La figure 2 illustre différentes conceptions de revêtements de sols selon l'invention.

### I/ MELANGE REACTIONNEL

Les composés suivants sont intégrés au mélange réactionnel aux quantités suivantes exprimées en % en masse :

| | ***COUCHE N°1 (ENVERS)*** | ***COUCHE* N°2 *(INTERMEDIAIRE)*** | ***SURFACE (COUCHE D'USURE)*** |
|---|---|---|---|
| Huile de ricin (INTERCHIMIE) | ***36 %*** | ***40%*** | ***49%*** |
| Glycérol (INTERCHIMIE) | ***0 %*** | | ***5%*** |
| Isocyanate : mélange MDI + H 12MDI | ***20 %*** | ***20%*** | ***40%*** |
| Catalyseurs (sels métalliques exempts de métaux lourds) : K-KAT-XK 604 et K-KAT-XC 6112 (King Industry) | ***0,2%*** | ***0,2%*** | ***0,3%*** |
| Charges : CARBONATE DE CALCIUM | ***38,3%*** | ***12,8%*** | ***0%*** |
| Pigments organiques | ***5%*** | ***5%*** | ***4,7%*** |
| - stabilisant UV = TINUVIN 123 (CIBA) | | | ***1%*** |
| - ignifugeant = ATH | | ***20%*** | |
| - agent dessicant = BYK 088 (BYK Chemie) | ***0,5%*** | ***2%*** | |

Dans cet exemple, le rapport NCO/OH est donc de l'ordre de 1,3.

### II/ PROCEDE DE FABRICATION

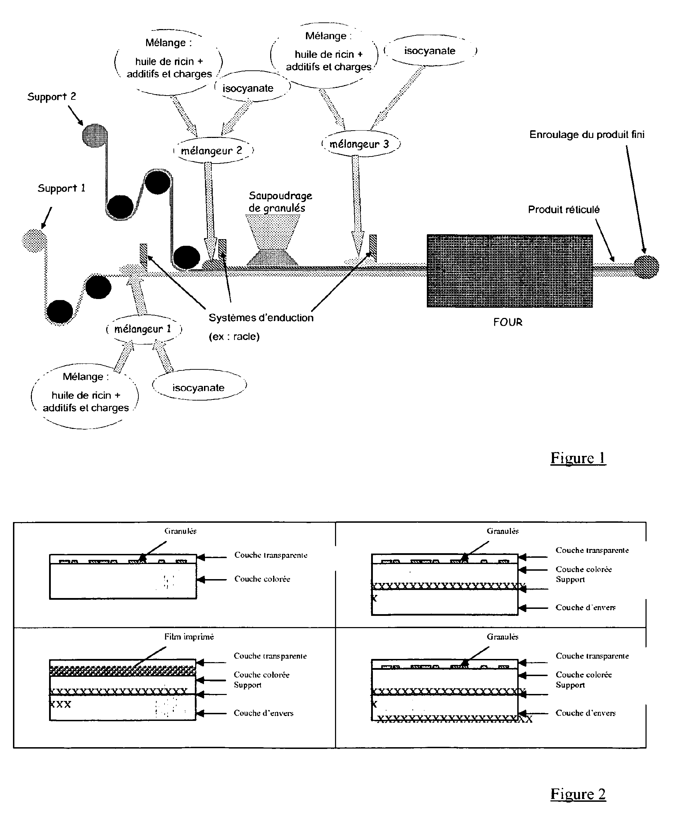

Les différentes étapes du procédé, à savoir mélange des réactifs, enduction et réticulation, sont réalisées en ligne, tel que schématisé à la figure 1.

Dans une première étape, un mélange est préparé à l'aide d'huile de ricin, du glycérol ainsi que de tous les autres ingrédients (charges, catalyseur et autres additifs) en dehors de l'isocyanate. Ceci peut aussi bien être réalisé à température ambiante (20°C) qu'à haute température, par exemple 150°C. Une fois les ingrédients mélangés, un dégazage sous pression réduite est réalisé.

Ensuite, le mélange d'isocyanates est intégré au mélange. Cette étape peut également se dérouler à température ambiante ou contrôlée (de 20 à 80°C) et ne doit durer qu'un temps court, compris entre 10 secondes et 10 minutes.

L'enduction est ensuite réalisée en ligne. L'épaisseur enduite peut varier de 0,1 à 2 mm.

Le support d'enduction peut être poreux ou fermé. Sa nature peut être variable : papier transfert, support non tissé, toile de jute, toile de coton, voile de verre, voile de verre + grille etc....

Ces différentes étapes sont répétées dans chaque mélangeur et les couches d'enduction se superposent.

Au cours du défilement du support enduit et avant la réticulation, des granulés peuvent être saupoudrés.

La dernière étape est la réticulation thermique de l'ensemble. Celle-ci est réalisée dans un four, sous un flux d'air chaud, la température de réticulation pouvant s'échelonner de 80 à 220°C et la durée de réticulation pouvant varier de 1 à 10 minutes.

Les couches peuvent ensuite être vernies, avec un traitement de surface habituellement utilisé dans les revêtements de sols.

### III/ MATERIAU OBTENU

Un matériau constitué de 3 couches et intégrant des granulés est obtenu à la fin de la ligne.

D'autres conceptions de matériaux, notamment celles schématisées à la figure 2, peuvent être envisagées. Il s'agit d'un produit hétérogène comprenant de 2 à 4 couches selon l'épaisseur désirée, ces couches pouvant être compactes ou sous forme de mousse.

Un matériau selon l'invention possède de nombreux avantages :
- Il peut être fabriqué dans les mêmes conditions que le PVC plastifié enduit ;
- La préparation et la réticulation sont beaucoup plus rapides que pour le linoléum.
- L'invention ne contient ni chlore, ni phthalates.

Par ailleurs, un tel matériau présente des propriétés physiques très intéressantes, résumées dans le tableau ci-dessous en comparaison avec des revêtements de sols disponibles :

| Performances | Linoléum | INVENTION | Polyoléfine | PVC (EN 649) |
|---|---|---|---|---|
| Résistance à la glissance | ++ | + | - | + |
| Stabilité dimensionnelle | ++ | +++ | ++ | ++ |
| Incurvation à chaud | - | +++ | ++ | - |
| Fluage | +++ | +++ | ++ | +++ |
| Tenue UV | - | + | + | ++ |
| Abrasion | - | + | - | + |
| Indentation | - | - | + | ++ |
| Réaction au feu | ++ | ++ | ++ | +++ |
| Résistance à la rayure | - | ++ | - | ++ |
| Résistance au « scuffing » | + | +++ | ++ | +++ |
| Résistance à la tache | | ++ | ++ | ++ |
| Collage | ++ | ++ | + | ++ |
| Soudure | ---- | ++ | ++ | +++ |
| Total | + | ++ | ++ | +++ |

### • Propriétés de surface :

Les matériaux disponibles sur le marché nécessitent un traitement de surface (vernis) qui améliore les propriétés telles que la résistance aux taches, au « scuffing » ou à la rayure. L'invention ne nécessite aucun traitement de surface pour posséder ces mêmes propriétés. Cependant, celui-ci peut permettre d'améliorer l'aspect final du produit.

### • Stabilité :

L'invention étant un produit réticulé, aucun problème de stabilité dimensionnelle ou d'incurvation à chaud n'est observé une fois que la réticulation est terminée, ce qui n'est pas le cas du PVC ou des autres produits.

### • Pose :

Au niveau du collage, les résultats sont similaires à ceux du PVC pour les colles standards présentes sur le marché. En ce qui concerne les polyoléfines, pour obtenir un résultat semblable il est nécessaire de réaliser des traitements particuliers (traitement corona, primer d'accrochage etc..). Le linoléum du fait de sa rigidité nécessite l'usage de colles spéciales.

### • Décor :

Comme pour le PVC, l'invention offre une multitude de décor car les films formés peuvent être broyés sous forme de granulés ou imprimés ce qui est un très gros avantage que n'offre pas le linoléum.

## Revendications

1. Revêtement de sols, dépourvu de PVC, comprenant :
- éventuellement un support d'enduction ;
- une structure multicouche dont la couche supérieure d'usure est non textile et comprend un polyuréthane obtenu par réaction entre :
• un ou plusieurs polyols issus de l'huile de ricin et/ou du glycérol ; et
• un ou plusieurs isocyanates.

2. Revêtement de sols selon la revendication 1, ***caractérisé* en ce que** la couche supérieure est dépourvue de charges.

3. Revêtement de sols selon la revendication 1, ***caractérisé* en ce que** la couche supérieure est constituée du polyuréthane.

4. Revêtement de sols selon l'une des revendications précédentes, ***caractérisé* en ce que** le polyol est le diricinoléate monoacyl non hydroxylé de glycérol et/ou le tricinoléate de glycérol.

5. Revêtement de sols selon la revendication 4, ***caractérisé* en ce que** l'acide ricinoléique est non époxydé.

6. Revêtement de sols selon l'une des revendications précédentes, ***caractérisé* en ce que** l'isocyanate est un aromatique.

7. Revêtement de sols selon l'une des revendications précédentes, ***caractérisé* en ce que** l'isocyanate est un diisocyanate.

8. Revêtement de sols selon l'une des revendications précédentes, ***caractérisé* en ce qu'**il comprend au moins une autre couche à base de polyuréthane, avantageusement défini tel que dans l'une des revendications précédentes.

9. Revêtement de sols selon l'une des revendications précédentes, ***caractérisé* en ce qu'**il comprend en outre au moins un composé choisi dans le groupe suivant :
- un catalyseur de la fabrication de polyuréthane, avantageusement sans étain, par exemple un sel de zirconium, de bismuth, d'aluminium, de calcium, ou de magnésium ;
- une charge, avantageusement du carbonate de calcium, du talc, du kaolin, de la farine de bois, de la farine de liège ou de la silice ;
- un pigment ;
- un ou plusieurs additifs, par exemple un ignifugeant, un stabilisant UV, un agent dessicant ou un stabilisant thermique.

10. Utilisation d'un polyuréthane tel que défini à l'une des revendications 1 à 7 pour la fabrication de la couche supérieure d'usure non textile d'un revêtement de sols dépourvu de PVC et se présentant sous la forme d'une structure multicouche.

11. Procédé de fabrication d'un revêtement de sols selon l'une des revendications 1 à 9 comprenant les étapes suivantes :
- préparation du mélange destiné à la synthèse du polyuréthane ;
- enduction du mélange sur un support ;
- éventuellement saupoudrage de granulés ;
- réaction de réticulation.

12. Procédé de fabrication d'un revêtement de sols selon la revendication 11 ***caractérisé* en ce que** le polyol et l'isocyanate sont mélangés de sorte à obtenir un rapport NCO/OH compris entre 1 et 1,5.

13. Procédé de fabrication d'un revêtement de sols selon la revendication 11 ou 12 ***caractérisé* en ce que** le mélange comprend en masse :
- de l'huile de ricin à hauteur de 0 à 80% ;
- du glycérol à hauteur de 0 à 20%
- un isocyanate à hauteur de 10 à 30% ;
- un catalyseur à hauteur de 0 à 1 % ;
- des charges à hauteur de 0 à 75% ;
- des pigments à hauteur de 0 à 10% ;
- des additifs à hauteur de 0 à 75%.

14. Procédé de fabrication d'un revêtement de sols selon l'une des revendications 11 à 13 ***caractérisé* en ce que** le support d'enduction est un matériau choisi dans le groupe suivant : papier transfert, support non tissé, toile de jute, toile de coton ou voile de verre.

15. Procédé de fabrication d'un revêtement de sols selon l'une des revendications 11 à 14 ***caractérisé* en ce que** le mélange est enduit de manière à former un film d'épaisseur comprise entre 0,1 et 2 mm.

16. Procédé de fabrication d'un revêtement de sols selon l'une des revendications 11 à 15 ***caractérisé* en ce que** la réaction de réticulation est réalisée à une température comprise entre 80 et 220°C, avantageusement 150°C, et pendant une durée variant de 1 à 10 minutes.

## Claims

1. PVC-free floor covering consisting of:
- possibly a backing for the coating;
- a multilayer structure, the upper wear layer of which is non-textile and consists of a polyurethane obtained by reaction between:
• one or more polyols obtained from castor oil and/or glycerol; and
• one or more isocyanates.

2. Floor covering according to claim 1, **characterised by** the upper layer not containing fillers.

3. Floor covering according to claim 1, **characterised by** the upper layer being made of polyurethane.

4. Floor covering according to one of the previous claims, **characterised by** the polyol being non-hydroxylated glycerol monoacyl diricinoleate and/or glycerol triricinoleate.

5. Floor covering according to claim 4, **characterised by** the ricinoleic acid not being epoxydised.

6. Floor covering according to one of the previous claims, **characterised by** the isocyanate being aromatic.

7. Floor covering according to one of the previous claims, **characterised by** the isocyanate being a diisocyanate.

8. Floor covering according to one of the previous claims, ***characterised* by** its containing at least one other layer, based on polyurethane to advantage defined as in one of the previous claims.

9. Floor covering according to one of the previous claims, **characterised by** its containing in addition at least one compound selected from the following group:
- a catalyst for the production of polyurethane, to advantage not containing tin, e.g. a salt of zirconium, bismuth, aluminium, calcium, or magnesium;
- a filler, to advantage calcium carbonate, talc, kaolin, wood flour, cork flour or silica;
- a pigment;
- one or more additives, e.g. a fire retardant, a UV stabiliser, a drying agent or a thermal stabiliser.

10. Use of a polyurethane as defined in one of claims 1 to 7 for the manufacture of the upper non-textile wear layer of a PVC-free floor covering which is in the form of a multilayer structure.

11. Manufacturing process for a floor covering according to one of claims 1 to 9 that includes the following steps:
- preparation of the mixture intended for polyurethane synthesis;
- coating the mixture onto a backing;
- possibly dusting with granules;
- cross-linking reaction.

12. Manufacturing process for a floor covering according to claim 11 **characterised by** the polyol and isocyanate being mixed to obtain an NCO/OH ratio between 1 and 1.5.

13. Manufacturing process for a floor covering according to claim 11 or 12 **characterised by** the mixture containing by weight;
- castor oil at between 0 and 80%;
- glycerol at between 0 and 20%;
- an isocyanate at between 10 and 30%;
- a catalyst at between 0 and 1%;
- fillers at between 0 and 75%;
- pigments at between 0 and 10%;
- additives at between 0 and 75%.

14. Manufacturing process for a floor covering according to one of claims 11 to 13 **characterised by** the backing for the coating being a material selected from the following group: transfer paper, non-woven backing, jute canvas, cotton canvas or glass mat.

15. Manufacturing process for a floor covering according to one of claims 11 to 14 **characterised by** the mixture being spread in such a way as to form a film between 0.1 and 2 mm thick.

16. Manufacturing process for a floor covering according to one of claims 11 to 15 **characterised by** the cross-linking reaction being performed at a temperature between 80 and 220°C, to advantage 150°C, and for a period varying between 1 and 10 minutes.

## Patentansprüche

1. Bodenbelag ohne PVC mit:
- gegebenenfalls einer Unterlage;
- einer mehrschichtigen Struktur, wobei die obere Verschleißschicht nichttextil ist und ein Polyurethan umfasst, das gewonnen wird durch Reaktion zwischen:
• einem oder mehreren Polyolen aus Ricinusöl und/oder Glycerin; und
• einem oder mehreren Isocyanaten.

2. Bodenbelag nach Anspruch 1, **dadurch *gekennzeichnet,* dass** die obere Schicht füllstofffrei ist.

3. Bodenbelag nach Anspruch 1, **dadurch *gekennzeichnet,* dass** die obere Schicht aus Polyurethan besteht.

4. Bodenbelag nach einem der vorhergehenden Ansprüche, **dadurch *gekennzeichnet,* dass** das Polyol das nicht-hydroxylierte Monoacyl-Diricinoleat von Glycerin und/oder das Triricinoleat von Glycerin ist.

5. Bodenbelag nach Anspruch 4, **dadurch *gekennzeichnet,* dass** die Ricinolsäure nicht epoxydiert ist.

6. Bodenbelag nach einem der vorhergehenden Ansprüche, **dadurch *gekennzeichnet,* dass** das Isocyanat eine aromatische Verbindung ist.

7. Bodenbelag nach einem der vorhergehenden Ansprüche, **dadurch *gekennzeichnet,* dass** das Isocyanat ein Diisocyanat ist.

8. Bodenbelag nach einem der vorhergehenden Ansprüche, **dadurch *gekennzeichnet,* dass** er mindestens eine weitere Schicht auf der Basis von Polyurethan umfasst, das vorteilhafterweise wie in einem der vorhergehenden Ansprüche beschaffen ist.

9. Bodenbelag nach einem der vorhergehenden Ansprüche, **dadurch *gekennzeichnet,* dass** er außerdem mindestens eine aus der nachstehenden Gruppe ausgewählte Verbindung umfasst:
- einen Katalysator für die Polyurethanherstellung, vorteilhafterweise ohne Zinn, zum Beispiel ein Zirkonium-, Bismut-, Aluminium-, Kalzium- oder Magnesiumsalz;
- einen Füllstoff, vorteilhafterweise Kalziumkarbonat, Talk, Kaolin, Holzmehl, Korkmehl oder Kieselerde;
- ein Pigment;
- ein oder mehrere Additive, zum Beispiel ein Flammschutzmittel, einen UV-Stabilisator, ein Trocknungsmittel oder einen Wärmestabilisator.

10. Verwendung eines wie in einem der Ansprüche 1-7 beschriebenen Polyurethans für die Herstellung der oberen nichttextilen Verschleißschicht eines Bodenbelags ohne PVC, der in Form einer mehrschichtigen Struktur vorliegt.

11. Verfahren zur Herstellung eines Bodenbelags nach einem der Ansprüche 1-9 mit den nachstehenden Schritten:
- Vorbereitung der Mischung für die Polyurethansynthese;
- Auftrag der Mischung auf einen Untergrund;
- gegebenenfalls Aufpudern von Granulat;
- Vernetzungsreaktion.

12. Verfahren zur Herstellung eines Bodenbelags nach Anspruch 11, **dadurch *gekennzeichnet,* dass** das Polyol und das Isocyanat so vermischt werden, dass ein NCO/OH-Verhältnis zwischen 1 und 1,5 erzielt wird.

13. Verfahren zur Herstellung eines Bodenbelags nach Anspruch 11 oder 12, **dadurch *gekennzeichnet,* dass** das Gemisch folgende Masseanteile umfasst:
- Ricinusöl in Höhe von 0-80 %;
- Glycerin in Höhe von 0-20 %;
- ein Isocyanat in Höhe von 10-30 %;
- einen Katalysator in Höhe von 0-1 %;
- Füllstoffe in Höhe von 0-75 %;
- Pigmente in Höhe von 0-10 %;
- Additive in Höhe von 0-75 %.

14. Verfahren zur Herstellung eines Bodenbelags nach einem der Ansprüche 11-13, **dadurch *gekennzeichnet,* dass** es sich bei der Unterlage um ein Material aus der nachstehenden Gruppe handelt:
Trennpapier, Vliesstoffuntergrund, Juteleinen, Baumwollleinen oder Glasvlies.

15. Verfahren zur Herstellung eines Bodenbelags nach einem der Ansprüche 11-14, **dadurch *gekennzeichnet,* dass** das Gemisch so aufgetragen wird, um einen 0,1 - 2 mm dicken Film zu bilden.

16. Verfahren zur Herstellung eines Bodenbelags nach einem der Ansprüche 11-15, **dadurch *gekennzeichnet,* dass** die Vernetzungsreaktion bei einer Temperatur zwischen 80 und 220°C, vorteilhafterweise 150 °C, und während einer Dauer von 1-10 min durchgeführt wird.
